# EUROPEAN PATENT APPLICATION

(11) **EP 4 376 170 A1**
(43) Date of publication of application: **29.05.2024**
(21) Application number: 23160728.4
(22) Date of filing: 08.03.2023
(51) Int. Cl.: H01M 10/613, H01M 10/6556, H01M 10/6567, H01M 50/204, H01M 50/258, H01M 10/647

(54) **BATTERY PACK**

(30) Priority: 24.11.2022 CN 202211483276
(71) Applicant: AESC Japan Ltd., Kanagawa, 2520012 (JP)
(72) Inventor: ZHANG, Hui, Jiangyin City; Wuxi City; Jiangsu Province (CN); HE, Yafei, Jiangyin City, Wuxi City, Jiangsu Province (CN)
(74) Representative: Becker, Eberhard

(57) **Abstract**

A battery pack (100) including a tray (20) and cell stacks (10) is provided. Each of the cell stacks (10) includes a housing (11) and a cell array. The housing (11) includes a body (111), a first end cover (112) and a second end cover (113). The body (111) includes a top wall (1113), a bottom wall (1114), a first side wall (1111) and a second side wall (1112). The cell array is accommodated in the housing (11). A cooling channel (1115) is formed on at least one of the first side wall (1111) and the second side wall (1112), and an output electrode connected to a tab of the cell array is disposed on the first end cover (112). All the output electrodes are disposed in a coplanar arrangement.

## Description

### BACKGROUND

### Technical Field

The disclosure belongs to the technical field of new energy, and in particular relates to a battery pack.

### Description of Related Art

In the related art, a battery pack (also called pack) adopts an integral water-cooling plate, and the integral water-cooling plate is arranged at the top or bottom of the battery pack. The disadvantage of this cooling method is that a single cooling plate can only cool one surface of a cell stack, and the cooling efficiency is low and unable to meet the cooling requirements during fast charging. If a cooling plate is disposed between the cell stacks, the space utilization of the battery pack will be reduced, and the overall energy density of the battery pack will be decreased.

### SUMMARY

In view of the above shortcomings of the related art, a purpose of the present disclosure is to provide a battery pack capable of improving cooling efficiency while ensuring space utilization.

To achieve the above purpose and other related purposes, the present disclosure provides a battery pack, including: a tray, which includes a base plate and a guard beam surrounding the base plate, the base plate and guard beam form an accommodation space; and a cell stack, a plurality of cell stacks are arranged side by side in the accommodation space, and each cell stack includes: a housing, which includes a body with two open ends, and a first end cover and a second end cover respectively closing the two ends of the body, the body includes a top wall, a bottom wall, a first side wall and a second side wall; and a cell array, which is accommodated in the housing, the cell array includes a plurality of cell groups stacked vertically, each cell group includes one or more cells, and a large surface of each cell is parallel to the base plate of the tray; a cooling channel is formed on at least one of the first side wall and the second side wall; and an output electrode connected to a tab of the cell array is disposed on the first end cover, and all the output electrodes are disposed in a coplanar arrangement.

In an embodiment of the present disclosure, the first side wall is arranged separately from the top wall, the bottom wall and the second side wall, and the cooling channel is disposed on the first side wall.

In an embodiment of the present disclosure, a liquid inlet and a liquid outlet are provided on one end of the first side wall where the second end cover is located, and the liquid inlet and the liquid outlet are respectively communicated with the cooling channel.

In an embodiment of the present disclosure, the cooling channel is formed on the top wall or the bottom wall.

In an embodiment of the present disclosure, a heat-conducting structural adhesive is filled between the cell array and the inner surface of the housing.

In an embodiment of the present disclosure, the heat-conducting structural adhesive is at least filled between the cell array and the first side wall formed with the cooling channel.

In an embodiment of the present disclosure, one end of the first side wall close to the second end cover protrudes from the second end cover to form an extending portion, and the liquid inlet and the liquid outlet are arranged on the extending portion.

In an embodiment of the present disclosure, adjacent liquid inlets are connected to form a main liquid inlet pipeline, adjacent liquid outlets are connected to form a main liquid outlet pipeline, and the main liquid inlet pipeline and the main liquid outlet pipeline are arranged close to one side of the second end cover.

In an embodiment of the present disclosure, a structural adhesive is filled between various cell stacks and the base plate of the tray; and the heat-conducting structural adhesive is filled between the adjacent cell stacks.

In an embodiment of the present disclosure, a detachable hot-pressing film is provided between each of the cell stacks and the structural adhesive and/or the heat-conducting structural adhesive.

The technical effects in the embodiments of the present disclosure are: in the battery pack provided by the present disclosure, the cooling channels are integrated in the side walls of the cell stacks, and there is no need to set a separate cooling plate between the adjacent cell stacks, thereby saving space and improving the space utilization and energy density of the battery pack. The side wall where the cooling channel is located is set opposite to a side surface in the thickness direction of various cells, so that the cooling channel is able to cool each cell and improve the cooling efficiency.

### BRIEF DESCRIPTION OF THE DRAWINGS

FIG. 1 is a perspective view of a cell stack provided by an embodiment of the present disclosure.
FIG. 2 is a cross-sectional view of a cell stack provided by an embodiment of the present disclosure.
FIG. 3 is a partial exploded view of an assembled state of a plurality of cell stacks provided by an embodiment of the present disclosure.
FIG. 4 is a perspective view of an assembled state of a plurality of cell stacks provided by an embodiment of the present disclosure.
FIG. 5 is an exploded view of a battery pack provided by an embodiment of the present disclosure.
FIG. 6 is a schematic view explaining the principle of an assembled state of multiple cell stacks provided by an embodiment of the present disclosure.
FIG. 7 is a schematic view explaining the principle of a partial assembly of a battery pack provided by an embodiment of the present disclosure.
FIG. 8 is a cross-sectional view of a cell stack provided by another embodiment of the present disclosure.
FIG. 9 is schematic view explaining the principle of a partial assembly of a battery pack provided by another embodiment of the present disclosure.
FIG. 10 is a cross-sectional view of a cell stack provided by still another embodiment of the present disclosure.
FIG. 11 is schematic view explaining the principle of a partial assembly of a battery pack provided by still another embodiment of the present disclosure.

### DESCRIPTION OF THE EMBODIMENTS

Embodiments of the present disclosure are described below through specific examples, and those skilled in the art can easily understand other advantages and effects of the present disclosure from the contents disclosed in this specification. The present disclosure can also be implemented or applied through different specific implementation modes, and various modifications or changes can be made to the details in this specification based on different viewpoints and applications without departing from the spirit of the present disclosure. It should be noted that, in the case of no conflict, the following embodiments and features in the embodiments can be combined with each other.

It should be noted that the diagrams provided in the following embodiments are only schematically illustrating the basic concepts of the present disclosure, and thus only the components related to the present disclosure are shown in the diagrams, rather than the number, shape and dimension of the components in actual implementation. The type, quantity and proportion of various components can be changed freely during actual implementation, and the component layout may also be more complicated in practice.

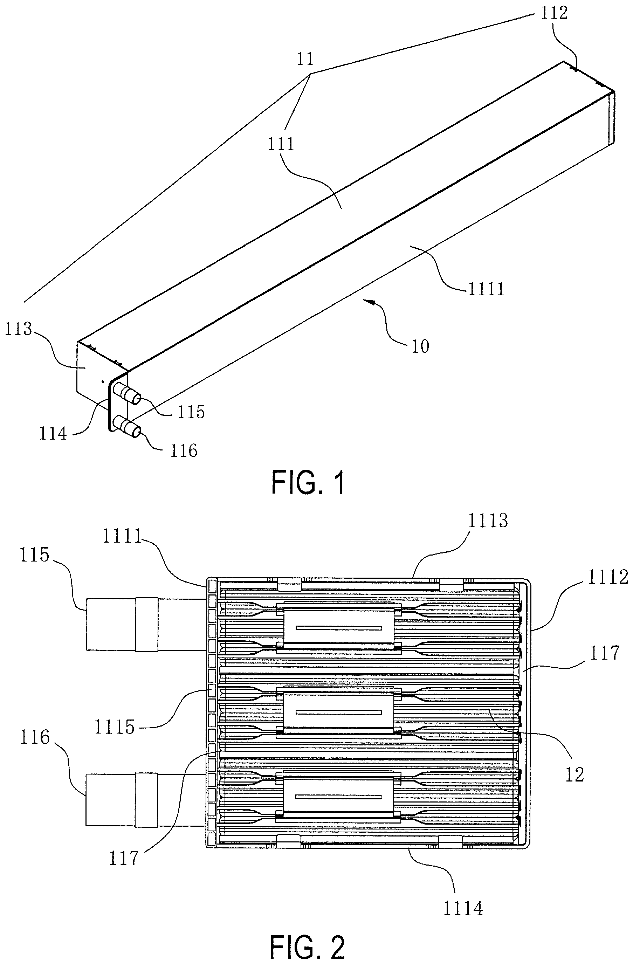

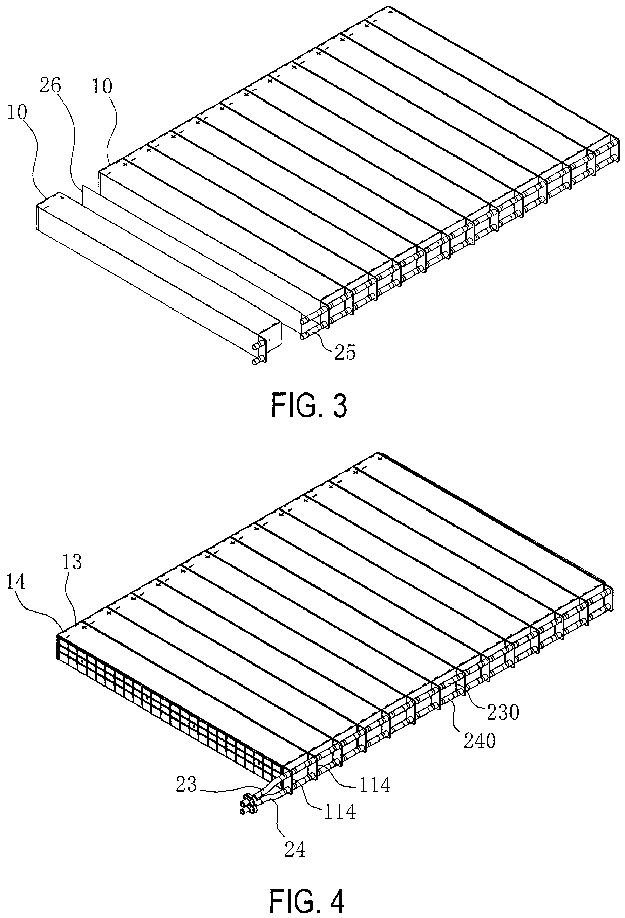

Referring to FIG. 1 to FIG. 11, the present disclosure provides a battery pack 100, and the battery pack 100 has a plurality of cell stacks 10 arranged side by side. It can be understood that the cell stack 10 is an independent unit, which has a complete package appearance, composed of a plurality of cells 12, and the battery pack 100 is an energy assembly composed of a plurality of such independent units that may be directly coupled with an electrical equipment.

The power battery of an electric vehicle is generally disposed under the chassis of the vehicle, or directly used as a structural member of the chassis of the vehicle, so the power battery has to be designed with a flat appearance with high space utilization and energy density. However, the high-density arrangement of the cell and the cell stack will affect the heat dissipation of the battery pack, especially in the process of high-power charging and discharging, the battery temperature will rise dramatically, so an efficient heat dissipation system is needed to dissipate heat from the battery pack. However, a conventional heat dissipation method is carried out generally by arranging a cooling plate at the bottom surface or top surface of the battery pack. The cooling plate can only contact the top surface and bottom surface of various cell stacks, and the heat of the side surface of the cell stack cannot be effectively dissipated. In order to solve the heat dissipation problem of the side surface of the cell stack, there is also a heat dissipation scheme that sandwiches the cooling plate between the adjacent cell stacks. However, this solution will increase the distance between the cell stacks and reduce space utilization and energy density of the battery pack.

The battery pack 100 provided in this disclosure integrates the cooling channel 1115 into the housing of the cell stack 10, and the housing of the cell stack 10 is directly used as a heat dissipation component. The cooling channel 1115 can not only dissipate heat for the cell stack 10 where the cooling channel 1115 itself is located, but also can dissipate heat for the cell stack 10 adjacent thereto. While realizing heat dissipation for the side surface of the cell stack 10, the distance between the adjacent cell stacks 10 is minimized to the greatest extent. In this way, the space utilization and energy density of the battery pack 100 are improved.

The following describes the technical solution of the present disclosure in detail in conjunction with several specific embodiments:

Please refer to FIG. 1 and FIG. 2, the cell stack 10 provided by Embodiment 1 shown in the figure includes a cell 12, a housing 11, and a cooling channel 1115. The housing 11 is enclosed to form a cavity that accommodates multiple cells 12. In this embodiment, the housing 11 includes a body 111 with two open ends, and a first end cover 112 and a second end cover 113 respectively closing the two ends of the body 111. The body 111 includes a top wall 1113, a bottom wall 1114, a first side wall 1111, and a second side wall 1112. The housing 11 may be made of high thermal conductivity materials, such as aluminium alloy. In order to simplify the layout of the cell stack 10 as much as possible, the housing 11 may be made as a structure with a specific elongated contour, such as an elongated housing with a positive cross-section, or a flat housing. The housing 11 may be, for example, integrally formed by stamping, drawing and other processes, or may be spliced by multiple plates. When a plurality of plates are used for splicing, the plates may be connected as a whole by welding, riveting, etc., for example.

Please refer to FIG. 2, in this embodiment, the cooling channel 1115 is formed in the first side wall 1111, and the cooling channel 1115 may perform heat exchange with the inner and outer sides of the housing 11 simultaneously. In the disclosure, the housing of the cell stack 10 is used as a heat dissipation component. Compared with the conventional method which uses a cooling plate, a housing structure is omitted between the cooling channel 1115 and the cell 12, so that the heat transfer is more direct and the heat dissipation efficiency is improved. In addition, the cooling channel 1115 of the present disclosure can not only dissipate heat for the cell stack 10 where the cooling channel 1115 itself is located, but also dissipate heat for the adjacent cell stacks 10.

Please refer to FIG. 1 and FIG. 2. In this embodiment, the first side wall 1111 and the top wall 1113 as well as the bottom wall 1114 and the second side wall 1112 are arranged separately. The top wall 1113, the bottom wall 1114 and the second side wall 1112 are a U-shaped housing provided integrally. In this embodiment, the first side wall 1111 may be made of microporous aluminium flat tube, for example.

Please refer to FIG. 2, in this embodiment, a plurality of cells 12 may form a cell array, and the cell array may include a plurality of cell groups stacked. Each cell group includes one or more cells 12. The large surface of each cell 12 is parallel to the base plate 201 of the tray 20. In this disclosure, the large surface refers to the two side surfaces along the thickness direction of the cell, that is, the surface with the largest extension area on the surface of the cell, which may be used as a bonding surface when stacking cells, so that the side surfaces in the thickness direction of various cells 12 can form heat conduction with the first side wall 1111 respectively. In a specific embodiment, the cell 12 may be, for example, a soft-packed cell or a square cell. The first end cover 112 is provided with an output electrode connected to the tab of the cell array, and the output electrode includes a positive electrode 13 and a negative electrode 14. All the output electrodes are disposed in a coplanar arrangement, and the output electrodes of various cell stacks 10 are connected through copper bars 28. Since the output electrodes are coplanar, the copper bars 28 may be arranged within the same plane, thereby further improving space utilization.

Further, a heat-conducing structural adhesive is filled between the cell 12 and the inner wall of the housing 11. It can be understood that when a soft-packed cell is adopted, the edge of the cell 12 has an irregular shape, and the heat-conducing structural adhesive can fill the gap between the cell 12 and the inner wall of the housing 11, thus improving heat conduction efficiency, and the heat-conducting structural adhesive can effectively fix the cell 12 as well.

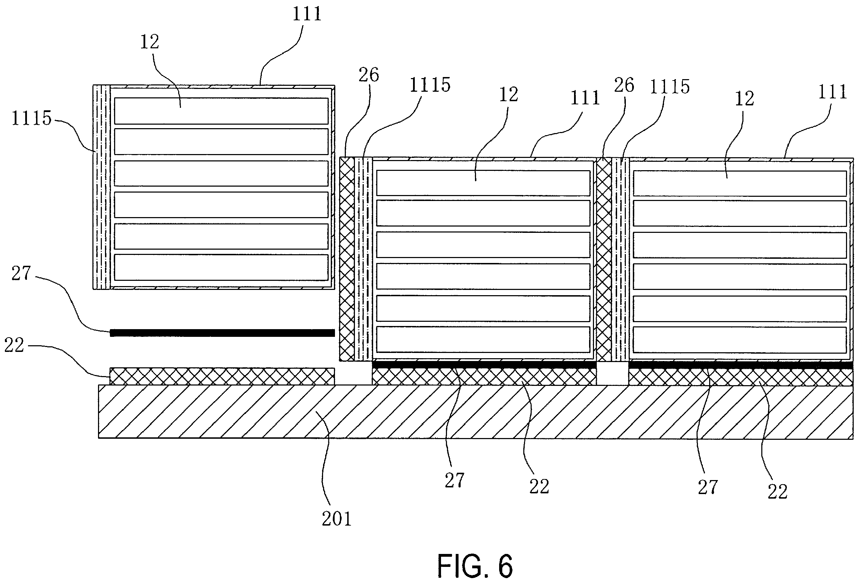

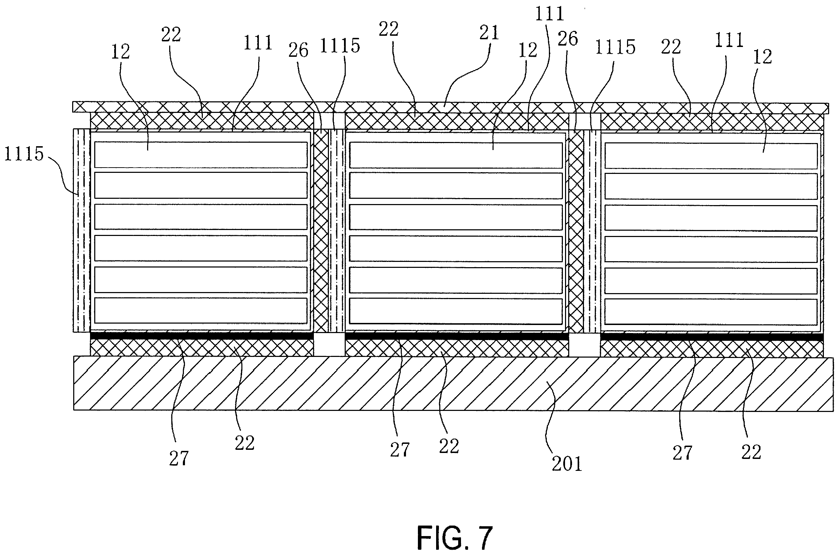

Specifically, as shown in FIG. 2, the heat-conducting structural adhesive is at least filled between the cell 12 and the first side wall 1111. In this embodiment, when a plurality of cell stacks 10 are assembled into a battery pack 100, the first side walls 1111 of various cell stacks 10 face the same side. Taking FIG. 6 and FIG. 7 as examples, the first side walls 1111 of various cell stacks 10 all face to the left, and the cooling channel 1115 on the right cell stack 10 of the two adjacent cell stacks 10 are able to cool the left cell stack 10.

Please refer to FIG. 1, FIG. 3, and FIG. 4. In this embodiment, one end of the first side wall 1111 protrudes from the second end cover 113 to form an extending portion 114. The liquid inlet 115 and the liquid outlet 116 of the cooling channel 1115 are located on the extending portion 114. Further, the liquid inlet 115 and the liquid outlet 116 are arranged in a manner of passing through a side cover 112 along a direction perpendicular to the side cover 112. The adjacent liquid inlets 115 are connected to form a main liquid inlet pipeline 230, the adjacent liquid outlets 116 are connected to form a main liquid outlet pipeline 240, and the main liquid inlet pipeline 230 and the main liquid outlet pipeline 240 are arranged close to one side of the second end cover 113. In this embodiment, the liquid inlet 115 and the liquid outlet 116 adopt a design similar to a three-way pipe. When multiple cell stacks 10 are stacked in the battery pack 100, the liquid inlet 115 and the liquid outlet 116 of each cell stack 10 are in a coaxial state respectively. Under the circumstances, it is only required to use short pipes 25 to connect the liquid inlets 115 and the liquid outlets 116 respectively to realize parallel connection of the cooling channels 1115. The liquid inlets 115 communicate with the main liquid inlet pipe 23, and the liquid outlets 116 communicate with the main liquid outlet pipe 24. Such configuration avoids redundant pipeline layout and further improves space utilization.

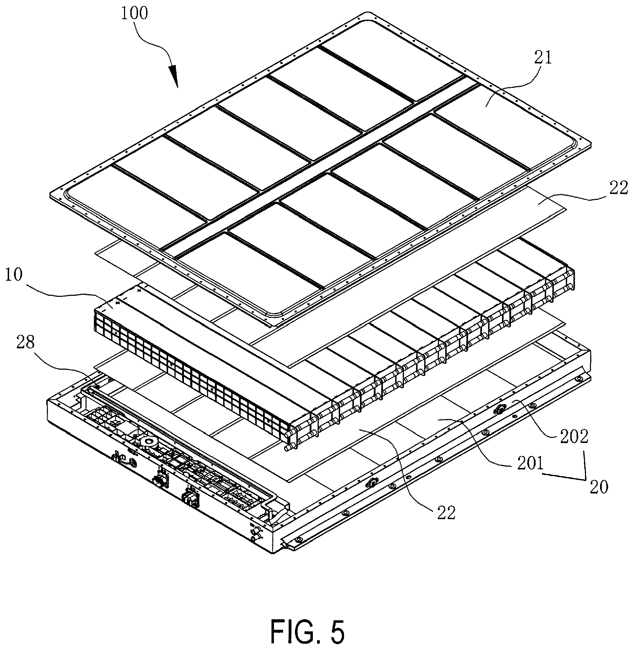

Please refer to FIG. 5, FIG. 6 and FIG. 7, in this embodiment, the tray 20 includes a base plate 201 and a guard beam 202 surrounding the base plate, and the base plate 201 and the guard beam 202 form an accommodation space. The upper cover 21 is detachably disposed on the upper end of the tray 20. A plurality of cell stacks are arranged side by side in the accommodation space. Except for the outermost cell stack 10, the first side walls 1111 of the rest of cell stacks 10 are arranged opposite to the second side walls 1112 of the adjacent cell stack 10. In this way, the cooling channel 1115 is able to simultaneously cool the cell stack 10 where the cooling channel 1115 itself is located and the adjacent cell stack 10.

Please refer to FIG. 7, in this embodiment, structural adhesive 22 is filled between the bottom surface of each cell stack 10 and the tray 20, so as to effectively fix each cell stack 10. In other alternative embodiments, the cell stack 10 may also be fixed in other ways, for example, buffer pads made of an elastic material are respectively arranged on the upper side and lower side of the cell stack 10, and the cell stack 10 is clamped firmly by the elastic force of the buffer pad, or the cell stack 10 and the tray 20 are directly fixed by connecting members such as bolts and rivets.

Please refer to FIG. 7, in this embodiment, the heat-conducting structural adhesive is filled between the adjacent cell stacks 10. In order to further distinguish the heat-conducting structural adhesive from the heat-conducting structural adhesive inside the cell stack 10, here the heat-conducting structural adhesive is called the outer heat-conducting adhesive 26, and the heat-conducting structural adhesive inside the cell stack 10 is called the inner heat-conducting adhesive 117. The outer heat-conducting adhesive 26 is able to fill the gap between the adjacent cell stacks 10 to improve the heat exchange efficiency, and on the other hand, the outer heat-conducting adhesive 26 may also buffer the expansion generated during the operation process of the battery.

Please refer to FIG. 7, in this embodiment, a detachable hot-pressing film 27 is provided between the outer wall of each cell stack 10 and the structural adhesive 22. In a specific embodiment, the material of the detachable hot-pressing film 27 may be, for example, one or more of epoxy resin, polyurethane, polyolefin, ethylene copolymer, and polyimide. The hot-pressing interface of the detachable heating-pressing film 27 of the present disclosure has a reliable bonding strength at the normal operating temperature of the battery pack 100. The bonding strength between the non-heat pressing interface and the structural adhesive 22 is good. Under the circumstances, the cell stack 10 is reliably fixed. Between 60°C and 100°C, there is a temperature point at which the bonding strength decays dramatically. When the temperature exceeds the above range, the bonding strength is considerably decayed, and the hot-pressing interface is easy to disassemble. Under the circumstances, the cell stack 10 may be easily separated from the detachable hot-pressing film 27. The detachable hot-pressing film 27 has good insulation performance, and its thickness is, for example, between 10um and 2mm. The heat of the cooling channel 1115 may be conducted to the surface of the detachable hot-pressing film 27. It should be noted that the cooling liquid introduced into the cooling channel 1115 of the present disclosure may be either a high-temperature cooling liquid or a low-temperature cooling liquid. For example, in a low-temperature environment in winter, high-temperature cooling liquid may be introduced into the cooling channel 1115 to heat the cell stack 10. Therefore, the present disclosure is able to heat the detachable hot-pressing film 27 through the cooling channel 1115. In the case where there is no external heating device, disassembly of the cell stack 10 is also possible.

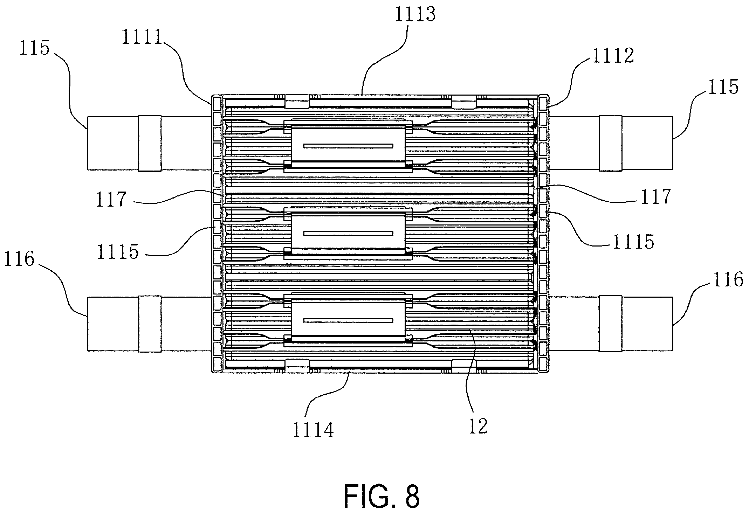

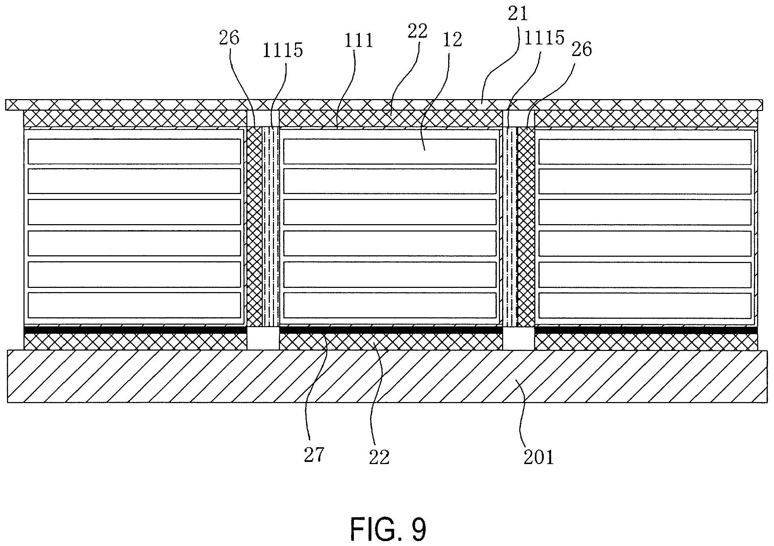

Please refer to FIG. 8 and FIG. 9. The only difference between Embodiment 2 and Embodiment 1 shown in the figure is the number and position of the cooling channels 1115 and the assembling method of the cell stack 10. In this embodiment, the cooling channel 1115 is provided on the first side wall 1111 and the second side wall 1112 of the housing 11, that is, a cooling channel 1111 is respectively provided on both sides of the cell stack 10, and the cell stack 10 may simultaneously cool the two adjacent cell stacks 10. Based on this, the cell stack 10 in this embodiment may be assembled with an ordinary cell stack without cooling channels to form a battery pack 100, as shown in FIG. 9. Both sides of each cell stack 10 are respectively provided with a cell stack without cooling channels, and this arrangement may also allow the side surface of each cell stack 10 to be cooled.

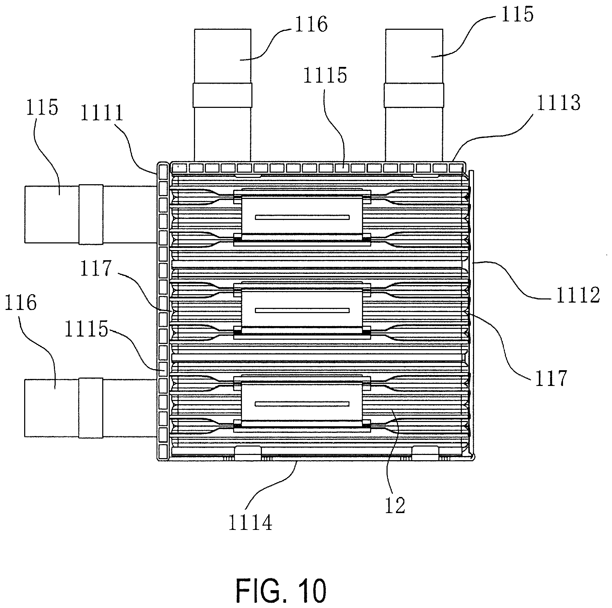

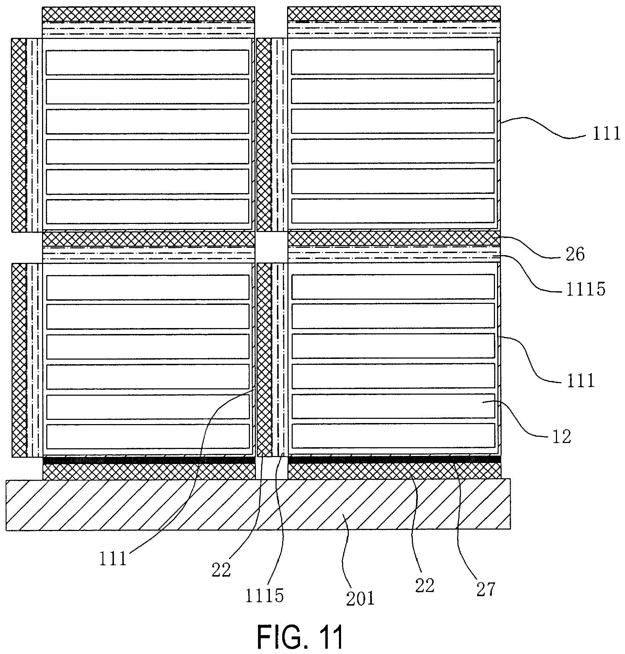

Please refer to FIG. 10 and FIG. 11. The difference between Embodiment 3 and Embodiment 1 shown in the figure also lies in the number and position of the cooling channels 1115 and the assembling method of the cell stack 10. For example, as shown in the embodiments of FIG. 10 and FIG. 11, the cooling channels 1115 may be distributed on the first side wall 1111 and the top wall 1113 of the housing 11. In this embodiment, multiple cell stacks 10 may be stacked horizontally and vertically as shown in FIG. 11. The cooling channel 1115 on the lower right cell stack 10 may simultaneously cool the left and upper cell stacks 10.

To sum up, the battery pack 100 provided by the present disclosure integrates the cooling channel 1115 into the side wall of the cell stack 10, and there is no need to set a separate cooling plate between the adjacent cell stacks 10. With such design, it is possible to save space and improve space utilization and energy density of the battery pack 100. The side wall where the cooling channel 1115 is located is set opposite to the side surface in the thickness direction of each cell 12, so that the cooling channel 1115 is able to cool each cell 12, thus improving the cooling efficiency.

The battery pack 100 provided by the present disclosure integrates the cooling channel 1115 in the housing of the cell stack 10. The cooling channel 1115 can not only dissipate heat for the cell stack 10 where the cooling channel 1115 itself is located, but also dissipate heat for the adjacent cell stacks 10. While realizing heat dissipation for the side surface of the cell stack 10, the distance between the adjacent cell stacks 10 is minimized to the greatest extent. In this way, the space utilization and energy density of the battery pack 100 are improved.

In the present disclosure, the liquid inlet 115 and the liquid outlet 116 adopt a design similar to a three-way pipe. When multiple cell stacks 10 are stacked in the battery pack 100, the liquid inlet 115 and the liquid outlet 116 of various modules are in a coaxial state respectively. Under the circumstances, it is only required to use short pipes 25 to connect the liquid inlets 115 and the liquid outlets 116 respectively to realize parallel connection of the cooling channels 1115. Such configuration avoids redundant pipeline layout and further improves space utilization.

The hot-pressing interface of the detachable hot-pressing film 27 of the present disclosure has a reliable bonding strength at the normal operating temperature of the battery pack 100. The bonding strength between the non-hot pressing interface and the structural adhesive 22 is good. Under the circumstances, the cell stack 10 is reliably fixed. Between 60°C and 100°C, there is a temperature point at which the bonding strength reduces dramatically. When the temperature exceeds the above range, the bonding strength is considerably reduced, and the hot-pressing interface is easy to disassemble. Under the circumstances, the cell stack 10 may be easily separated from the detachable hot-pressing film 27. The heat of the cooling channel 1115 may be conducted to the surface of the detachable hot-pressing film 27. The present disclosure is able to heat the detachable hot-pressing film 27 through the cooling channel 1115. In the case where there is no external heating device, disassembly of the cell stack 10 is also possible.

The above-mentioned embodiments are only illustrative to illustrate the principles of the present disclosure and effects thereof, but are not intended to limit the present disclosure. Anyone skilled in the art can modify or change the above-mentioned embodiments without departing from the spirit and scope of the present disclosure. Therefore, all equivalent modifications or changes made by those skilled in the art without departing from the spirit and technical ideas disclosed in the present disclosure shall still be covered by the claims of the present disclosure.

In the description herein, many specific details are provided, such as examples of components and/or methods, to provide a thorough understanding of the embodiments of the present disclosure. However, one skilled in the art will recognize that embodiments of the present disclosure may be implemented without one or more of the specific details, or through other devices, systems, assemblies, methods, components, materials, parts, and the like. In other instances, commonly known structures, materials, or operations are not specifically shown or described in detail to avoid shifting focus from aspects of embodiments of the present disclosure.

Reference throughout this specification to "one embodiment," "an embodiment," or "a specific embodiment" means that a particular feature, structure, or characteristic described in connection with the embodiment is included in at least one embodiment of the present disclosure and does not necessarily in all examples. Thus, various descriptions of the phrases "in one embodiment," "in an embodiment," or "in a specific embodiment" in various paragraphs throughout the specification are not necessarily referring to the same embodiment. Furthermore, the particular features, structures or characteristics of any particular embodiment disclosed herein may be combined in any suitable manner with one or more other embodiments. It should be understood that other variations and modifications of the disclosed embodiments described and illustrated herein are possible in light of the teachings herein and are to be considered part of the spirit and scope of the disclosure.

It should also be understood that one or more of the elements shown in the figures may also be implemented in a more separate or integrated manner, or even removed as inoperable in certain circumstances or provided as may be useful depending on a particular application.

In addition, unless otherwise expressly indicated, any marking arrows in the drawings should be regarded as illustrative only, and not limiting. In addition, as used herein, the term "or" is generally intended to mean "and/or" unless stated otherwise. Combinations of parts or steps are also considered to be clearly described where terms are foreseen because it is unclear to show separation or combination.

As used in the description herein and throughout the claims below, "a," and "the" include plural references unless otherwise indicated. Likewise, as used in the description herein and throughout the claims that follow, the meaning of "in" includes "in" and "on" unless otherwise specified.

## Claims

1. A battery pack (100), **characterized by** comprising:
a tray (20), comprising a base plate and a guard beam (202) surrounding the base plate, wherein the base plate (201) and guard beam (202) form an accommodation space; and
a cell stack (10), wherein a plurality of cell stacks (10) are arranged side by side in the accommodation space, and each of the cell stacks (10) comprises:
a housing (11), comprising a body (111) with two open ends, and a first end cover (112) and a second end cover (113) respectively closing the two ends of the body (111), wherein the body (111) comprises a top wall (1113), a bottom wall, a first side wall and a second side wall (1112); and
a cell array, accommodated in the housing (11), wherein the cell array comprises a plurality of cell groups stacked vertically, each of the cell groups comprises one or more cells (12), and a large surface of each of the cells (12) is parallel to the base plate (201) of the tray (20); wherein
a cooling channel (1115) is formed on at least one of the first side wall (1111) and the second side wall (1112); and
an output electrode connected to a tab of the cell array is disposed on the first end cover (112), and all the output electrodes are disposed in a coplanar arrangement.

2. The battery pack (100) according to claim 1, **characterized in that** the first side wall (1111) is disposed separately from the top wall (1113), the bottom wall (1114) and the second side wall (1112), and the cooling channel (1115) is disposed on the first side wall (1111).

3. The battery pack (100) according to claim 1, **characterized in that** a liquid inlet (115) and a liquid outlet (116) are disposed on one end of the first side wall (1111) where the second end cover (113) is located, and the liquid inlet (115) and the liquid outlet (116) are respectively communicated with the cooling channel (1115).

4. The battery pack (100) according to claim 1, **characterized in that** the cooling channel (1115) is formed on the top wall (1113) or the bottom wall (1114).

5. The battery pack (100) according to claim 1, **characterized in that** a heat-conducting structural adhesive (26, 117) is filled between the cell array and an inner surface of the housing (11).

6. The battery pack (100) according to claim 5, **characterized in that** the heat-conducting structural adhesive (26, 117) is at least filled between the cell array and the first side wall (1111) formed with the cooling channel (1115).

7. The battery pack (100) according to claim 3, **characterized in that** one end of the first side wall (1111) close to the second end cover (113) protrudes from the second end cover (113) to form an extending portion (114), and the liquid inlet (115) and the liquid outlet (116) are disposed on the extending portion (114).

8. The battery pack (100) according to claim 7, **characterized in that** the adjacent liquid inlets (115) are connected to form a main liquid inlet pipeline (230), the adjacent liquid outlets (116) are connected to form a main liquid outlet pipeline (240), and the main liquid inlet pipeline (230) and the main liquid outlet pipeline (240) are disposed close to one side of the second end cover (113).

9. The battery pack (100) according to claim 8, **characterized in that** a structural adhesive (22) is filled between each of the cell stacks (10) and the base plate (201) of the tray (20); and a heat-conducting structural adhesive (26, 117) is filled between the adjacent cell stacks (10).

10. The battery pack (100) according to claim 9, **characterized in that** a detachable hot-pressing film is disposed between each of the cell stacks (10) and the structural adhesive (22) and/or the heat-conducting structural adhesive (26, 117).

## Amended claims

### Amended claims in accordance with Rule 137(2) EPC.

1. A battery pack (100), **characterized by** comprising:
a tray (20), comprising a base plate and a guard beam (202) surrounding the base plate, wherein the base plate (201) and guard beam (202) form an accommodation space; and
a cell stack (10), wherein a plurality of cell stacks (10) are arranged side by side in the accommodation space, and each of the cell stacks (10) comprises:
a housing (11), comprising a body (111) with two open ends, and a first end cover (112) and a second end cover (113) respectively closing the two ends of the body (111), wherein the body (111) comprises a top wall (1113), a bottom wall, a first side wall and a second side wall (1112); and
a cell array, accommodated in the housing (11), wherein the cell array comprises a plurality of cell groups stacked vertically, each of the cell groups comprises one or more cells (12), and a large surface of each of the cells (12) is parallel to the base plate (201) of the tray (20);
wherein
a cooling channel (1115) is integrated into at least one of the first side wall (1111) and the second side wall (1112); and
an output electrode connected to a tab of the cell array is disposed on the first end cover (112), and all the output electrodes are disposed in a coplanar arrangement,
wherein a liquid inlet (115) and a liquid outlet (116) are disposed on one end of the first side wall (1111) where the second end cover (113) is located, wherein the liquid inlet (115) and the liquid outlet (116) are respectively communicated with the cooling channel (1115) and are perpendicular to the cooling channel (1115), the one end of the first side wall (1111) close to the second end cover (113) protrudes from the second end cover (113) to form an extending portion (114), and the liquid inlet (115) and the liquid outlet (116) are disposed on the extending portion (114), the adjacent liquid inlets (115) are connected to form a main liquid inlet pipeline (230), the adjacent liquid outlets (116) are connected to form a main liquid outlet pipeline (240), and the main liquid inlet pipeline (230) and the main liquid outlet pipeline (240) are disposed close to one side of the second end cover (113).

2. The battery pack (100) according to claim 1, **characterized in that** the first side wall (1111) is disposed separately from the top wall (1113), the bottom wall (1114) and the second side wall (1112), and the cooling channel (1115) is disposed on the first side wall (1111).

3. The battery pack (100) according to claim 1, **characterized in that** the cooling channel (1115) is formed on the top wall (1113) or the bottom wall (1114).

4. The battery pack (100) according to claim 1, **characterized in that** a heat-conducting structural adhesive (26, 117) is filled between the cell array and an inner surface of the housing (11).

5. The battery pack (100) according to claim 4, **characterized in that** the heat-conducting structural adhesive (26, 117) is at least filled between the cell array and the first side wall (1111) formed with the cooling channel (1115).

6. The battery pack (100) according to claim 1, **characterized in that** a structural adhesive (22) is filled between each of the cell stacks (10) and the base plate (201) of the tray (20); and a heat-conducting structural adhesive (26, 117) is filled between the adjacent cell stacks (10).

7. The battery pack (100) according to claim 6, **characterized in that** a detachable hot-pressing film is disposed between each of the cell stacks (10) and the structural adhesive (22) and/or the heat-conducting structural adhesive (26, 117).
